# DEMANDE DE BREVET EUROPEEN

(11) **EP 4 331 453 A1**
(43) Date de publication de la demande: **06.03.2024**
(21) Numéro de dépôt: 23195514.7
(22) Date de dépôt: 05.09.2023
(51) Int. Cl.: A47J 47/14, B65D 63/00, A45F 5/00

(54) **EMBALLAGE POUR LE TRANSPORT D'ALIMENTS**

(30) Priorité: 05.09.2022 FR 2208877
(71) Demandeur: Souffleurs d'Ecume Ecoscience Provence, 83170 Brignoles (FR)
(72) Inventeur: Vial, Agathe, 69007 Lyon (FR); Cadet, Frédéric, 69007 Lyon (FR); Rinaldi, Sollèna, 83400 Hyères (FR); Martin, Mélissa, 83136 La Roquebrussanne (FR); Schneider, Mikaël, 83136 Neoules (FR)
(74) Mandataire: Hautier IP

(57) **Abrégé**

Emballage pour le transport d'aliments, comprenant une structure (2) ayant au moins une pièce (3, 4), chaque pièce comprenant une partie centrale (5, 6) et au moins deux rabats (7 à 10), la structure (2) étant pliable entre une position dépliée (D) dans laquelle la partie centrale (5, 6) et lesdits au moins deux rabats d'une pièce (3, 4) s'étendent dans un même plan, et une position repliée dans laquelle la structure (2) forme un contenant délimitant un logement pour recevoir au moins un aliment, la partie centrale (5, 6) d'une pièce (3, 4) formant un fond du contenant et chaque rabat (7 à 10) étant plié de manière à former un bord du contenant et à recouvrir au moins partiellement le logement, au moins une pièce étant à base d'un matériau résistant à l'eau et souple de façon à être déformable sous son propre poids.

## Description

### DOMAINE TECHNIQUE

La présente invention concerne les emballages pour le transport d'aliments, notamment les emballages réutilisables pour le transport de pizzas.

### ETAT DE LA TECHNIQUE

Actuellement, les emballages jetables sont largement utilisés pour transporter des aliments plats d'un certain diamètre, tels que des pizzas, des tartes, des gâteaux, des quiches, ou encore des crêpes. Ces emballages à usage unique sont des contenants en carton, en plastique ou en polystyrène expansé. En matière de contenant réutilisable, il existe actuellement un sac en matière tissu, couramment appelé « sac à tarte », permettant le transport par les particuliers de certains de ces aliments.

Pour le transport de pizzas, on utilise généralement des boites en carton. Les boites à pizza cartonnées se caractérisent par une durée d'utilisation brève et font l'objet d'erreurs de tri récurrentes en se retrouvant dans la poubelle d'ordures ménagères en dépit de leur caractère recyclable. Ceci est particulièrement dommageable car la boite à pizza est un déchet volumineux et encombrant, produit en grandes quantités chaque année en France. En outre, ces boites nécessitent une grande quantité de carton, ce qui les rend encombrantes et difficiles à ranger.

Il est donc intéressant de pouvoir fournir un emballage économique, peu encombrant, pratique, esthétique, lavable et réutilisable.

### RESUME

Selon un aspect, il est proposé un emballage pour le transport d'aliments, comprenant une structure ayant au moins une pièce, chaque pièce comprenant une partie centrale et au moins deux rabats s'étendant depuis la partie centrale de la pièce, la structure étant pliable entre une position dépliée dans laquelle la partie centrale et lesdits au moins deux rabats de ladite au moins une pièce s'étendent dans un même plan, et une position repliée dans laquelle la structure forme un contenant délimitant un logement pour recevoir au moins un aliment, la partie centrale de ladite au moins une pièce formant un fond du contenant et chaque rabat étant plié de manière à former un bord du contenant et à recouvrir au moins partiellement le logement.

Au moins une pièce est à base d'un matériau résistant à l'eau et souple de façon que chaque pièce soit déformable sous l'effet de son propre poids.

Ainsi, on fournit un emballage lavable et réutilisable tout en étant pliable, et notamment pliable sur lui-même, pour diminuer son encombrement lorsqu'on souhaite le ranger. Par comparaison, un emballage nettoyable en plastique rigide occupe un encombrement beaucoup plus grand.

Cela pose une véritable problématique dans les volumes restreints que sont les cuisines des ateliers de fabrication de pizzas à emporter, d'autant plus lorsque ces ateliers sont embarqués à l'intérieur d'un véhicule tel qu'un camion. Un emballage carton n'est pas lavable. S'il est plongé dans l'eau, il est altéré et ne peut pas resservir d'emballage.

### BREVE DESCRIPTION DES FIGURES

Les buts, objets, ainsi que les caractéristiques et avantages de l'invention ressortiront mieux de la description détaillée de modes de réalisation de cette dernière, illustrés par les dessins d'accompagnement suivants dans lesquels :
la figure 1, illustre de façon schématique en perspective un mode de réalisation d'une structure d'emballage dans une position dépliée ;
la figure 2, illustre de façon schématique en perspective un mode de réalisation d'une structure d'emballage dans une position repliée ;
la figure 3, illustre de façon schématique en perspective un autre mode de réalisation d'une structure d'emballage ;
la figure 4, illustre de façon schématique en perspective un mode de réalisation d'une structure d'emballage et d'un plateau ;
la figure 5, illustre de façon schématique en perspective un autre mode de réalisation d'un plateau ayant des éléments de support dans une position rétractée ;
la figure 6, illustre de façon schématique en perspective un autre mode de réalisation de plateaux ayant des éléments de support dans une position déployée ;
la figure 7, illustre de façon schématique en perspective un autre mode de réalisation d'une structure d'emballage dans une position repliée ;
la figure 8, illustre de façon schématique en perspective la structure d'emballage illustrée à la figure 7 dans une position dépliée ;
la figure 9, illustre de façon schématique en perspective un autre mode de réalisation d'une structure d'emballage dans une position repliée ; et
la figure 10, illustre de façon schématique en perspective la structure d'emballage illustrée à la figure 9 dans une position dépliée.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation et de mise en oeuvre de l'invention, sont énoncées ci-après des caractéristiques optionnelles qui peuvent éventuellement être utilisées en association ou alternativement.
- Selon un exemple, ladite au moins une pièce comprend quatre rabats s'étendant depuis la partie centrale de ladite au moins une pièce, et, dans la position dépliée, la structure a une forme d'une croix où chaque rabat correspond à une branche de la croix et la partie centrale de ladite au moins une pièce correspond à un milieu de la croix. On peut ainsi facilement former une boite pour le transport des aliments.
- Selon un exemple, la structure comporte une première pièce ayant deux rabats et une deuxième pièce distincte de la première pièce, la deuxième pièce ayant deux rabats, et, dans la position dépliée, la structure a une forme d'une croix où chaque rabat correspond à une branche de la croix et les parties centrales des première et deuxième pièces sont superposées pour former un milieu de la croix. A l'aide des deux pièces séparées, on peut réduire l'encombrement de l'emballage lorsqu'on souhaite le ranger pour une utilisation ultérieure, par exemple en superposant les pièces l'une sur l'autre. On facilite également la fabrication de l'emballage.
- Selon un exemple, au moins un rabat comprend au moins un renfort définissant, dans ledit au moins un rabat, au moins une zone privilégiée de pliure pour un passage dudit au moins un rabat de la position dépliée à la position repliée. On améliore ainsi le maintien de la structure dans sa position repliée.
- Selon un exemple, ledit au moins un rabat comprend un renfort principal s'étendant principalement selon une direction longitudinale et un renfort secondaire s'étendant parallèlement à la direction longitudinale du renfort principal, le renfort principal et le renfort secondaire définissant respectivement, dans ledit au moins un rabat, des première et deuxième zones privilégiées de pliure pour un passage dudit au moins un rabat de la position dépliée à la position repliée. On facilite le pliage de la structure tout en renforçant son maintien dans la position repliée.
- Selon un exemple, au moins un rabat comprend, dans la position repliée, au moins une pliure formée dans ladite au moins une zone privilégiée de pliure, ledit au moins un renfort s'étendant parallèlement à ladite au moins une pliure dudit au moins un rabat.
- Selon un exemple, l'emballage comprend une sangle pour porter l'emballage, et dans lequel la structure comprend au moins deux fentes pour le passage de la sangle.
- Selon un exemple, la sangle forme une poignée ou une hanse portée par au moins un rabat.
- Selon un exemple, chaque partie centrale comprend des renfoncements situés respectivement aux coins de la partie centrale, les renfoncements étant configurés pour former des orifices, dans la position repliée, afin de permettre une circulation d'air entre l'extérieur et le logement. On favorise l'aération de l'intérieur de la boite afin d'éviter que les aliments ne ramollissent en raison de la condensation.
- Selon un exemple, le matériau est un tissu. On fournit ainsi un emballage facile à nettoyer et particulièrement adapté pour être introduit dans une machine à laver le linge.
- Selon un exemple, le matériau est un feutre. Par exemple, la face intérieure du feutre est imperméable aux liquides. Un tel emballage permet d'empêcher la pénétration des eaux et des graisses pour être réutilisable rapidement sans avoir nécessairement à nettoyer l'emballage.
- Selon un exemple, l'emballage comprend au moins un plateau configuré pour être inséré dans le logement et destiné à supporter un aliment, le plateau étant suffisamment rigide pour ne pas se déformer sous l'effet de son propre poids.
- Selon un exemple, ledit au moins un plateau comprend deux éléments de support montés mobiles entre :
   - une position déployée permettant de maintenir les rabats à une première distance d'une face supérieure dudit au moins un plateau en regard des rabats en position repliée, et
   - une position rétractée permettant d'empiler deux plateaux de sorte que leur face en regard soit distante d'une deuxième distance strictement inférieure à la première distance.
- Selon un exemple, le passage de la position déployée à la position rétractée s'effectue par rotation.
- Selon un exemple, l'emballage comprend des premier et deuxième plateaux empilés au sein du logement, chaque plateau ayant ses deux éléments de support dans la position déployée, le premier plateau étant maintenu à la première distance du deuxième plateau par les éléments de support du deuxième plateau. Un tel emballage est particulièrement adapté pour transporter deux aliments de grande taille, c'est-à-dire d'un diamètre contour proche de celui du fond de l'emballage, et plus particulièrement deux pizzas.

On entend par un matériau, un film, une couche, « à base » d'un matériau A, un matériau, un film, une couche comprenant ce matériau A uniquement ou ce matériau A et éventuellement d'autres matériaux.

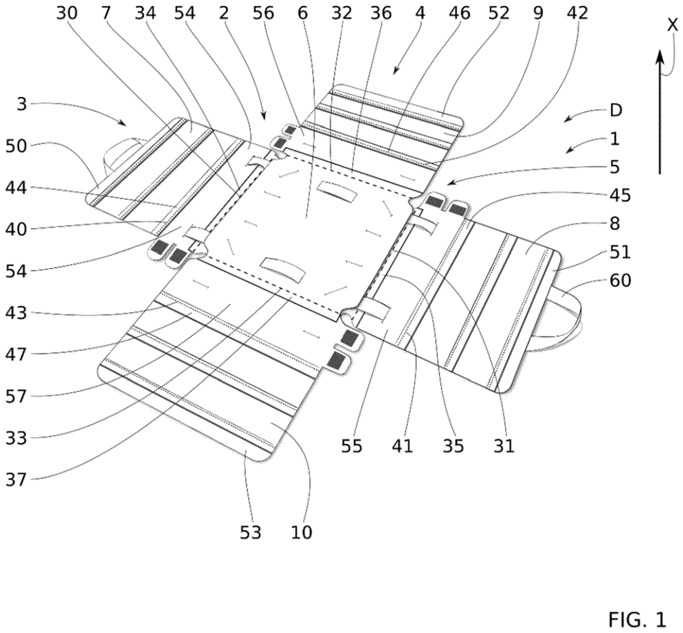

Sur la figure 1, on a représenté un emballage 1 pour le transport d'aliments, comme par exemple des crêpes, des tartes, des gâteaux, des quiches etc. L'emballage 1 est particulièrement adapté pour le transport de pizzas.

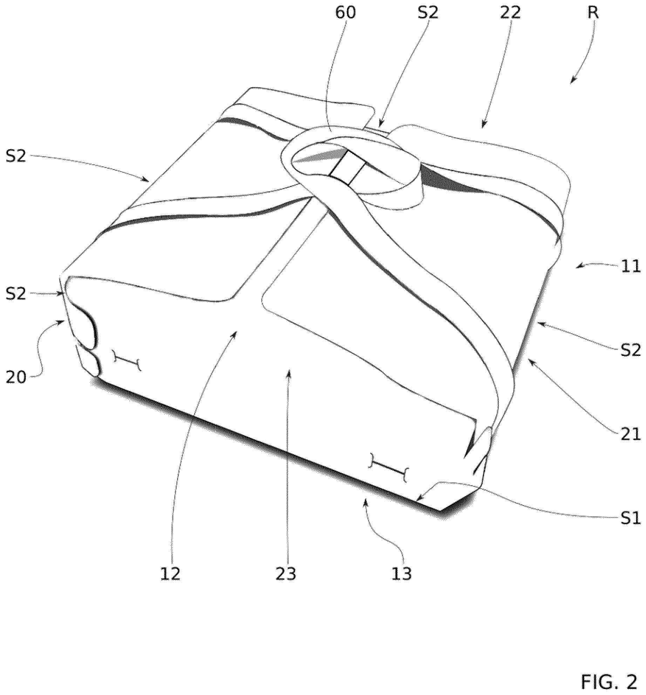

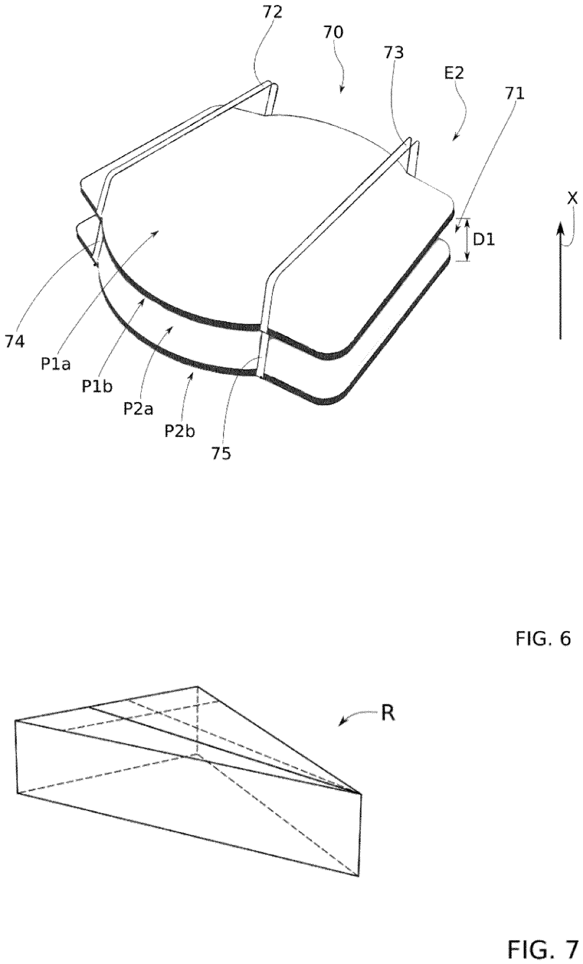

L'emballage 1 comprend une structure 2 ayant au moins une pièce 3, 4. Chaque pièce 3, 4 est distincte d'une autre pièce, c'est-à-dire qu'elles peuvent être fabriquées séparément, autrement dit chaque pièce 3, 4 est une pièce unitaire monobloc et ne peut donc pas être constituée de deux pièces distinctes. Chaque pièce 3, 4 comprend une partie centrale 5, 6 et au moins deux rabats 7 à 10 s'étendant depuis la partie centrale 5, 6 de la pièce 3, 4. On dit également qu'au moins deux rabats 7 à 10 appartiennent à une même pièce 3, 4. La structure 2 est configurée pour être pliable entre une position dépliée D, comme illustrée aux figures 1, 8 à 10, et une position repliée R, comme illustré aux figures 2 et 7. C'est-à-dire que la structure 2 peut passer de la position dépliée D à la position repliée R. En outre, la structure 2 est configurée pour être dépliable pour passer de la position repliée R à la position dépliée D.

Dans la position dépliée D, la partie centrale 5, 6 d'une pièce 3, 4 et les rabats 7 à 10 de la pièce 3, 4 s'étendent dans un même plan. En d'autres termes, la partie centrale 5, 6 d'une pièce et les rabats de la pièce 3, 4 peuvent être posés à plat.

Dans la position repliée R, la structure 2 forme un contenant 11 délimitant un logement 12 pour recevoir au moins un aliment. En outre, la partie centrale 5, 6, d'au moins une pièce 3, 4, forme un fond 13 du contenant 11 et chaque rabat 7 à 10 étant plié de manière à former un bord 20 à 23 du contenant 11. Par ailleurs, chaque rabat 7 à 10 plié est configuré pour recouvrir au moins partiellement le logement 12, comme illustré sur la figure 2.

Par exemple, au moins un rabat 7 à 10 est à base d'un matériau souple. On entend par matériau souple, un matériau apte à être déformable sous son propre poids. En d'autres termes, un matériau souple il s'aplatit sur lui-même lorsqu'on le pose sur une surface rigide. Selon un autre exemple, chaque rabat 7 à 10 est à base du matériau souple de façon à être déformable sous son propre poids. Par exemple, la partie centrale 5, 6 de chaque pièce 3, 4 est réalisée à partir d'un matériau souple. Selon un exemple, la partie centrale 5, 6 de chaque pièce 3, 4 est réalisée à partir du matériau souple de chaque rabat 7 à 10. Avantageusement, les parties d'une même pièce 3, 4, à savoir la partie centrale 5, 6 et les rabats 7 à 10 peuvent être à base du même matériau souple. Ainsi, le contenant 11 délimitant le logement 12 est formé par la coopération de deux pièces 3, 4 identiques, dans une idée de rationalisation de la production. Un emballage 1 à base d'un matériau souple peut être plié très facilement.

De manière générale, au moins une pièce 3, 4 est à base d'un matériau souple et résistant à l'eau. Par exemple, au moins une pièce 3, 4 est à base d'un matériau imperméable aux liquides. Par exemple, la face intérieure d'au moins une pièce 3, 4 est imperméable aux liquides, c'est-à-dire qu'une finition appliquée sur la pièce 3, 4 empêche la pénétration d'eau ou d'huile. Avantageusement, chaque pièce 3, 4 est à base d'un matériau souple et résistant à l'eau, et par exemple à base d'un matériau souple et imperméable aux liquides.

On entend par matériau résistant à l'eau, un matériau qui ne se désagrège pas, voire ne s'altère pas, lorsqu'il est plongé dans une solution de lavage, pendant une durée tbain supérieure ou égale à 1 heure à température TCbain supérieure ou égale à une température ambiante.

En particulier, après un bain d'une durée tbain à température TCbain, et après séchage, il conserve ou retrouve la géométrie et les propriétés mécaniques qu'il avait avant le bain. Ainsi, l'emballage 1 peut être nettoyé après utilisation pour resservir à nouveau d'emballage. De préférence, l'emballage n'est pas altéré même après au moins 10 cycles, voire 100 cycles de lavage, Chaque cycle comprenant au moins une phase de lavage et une phase de séchage. De préférence la durée tbain est supérieure ou égale à 30 minutes et la température TCbain est supérieure ou égale à la température ambiante. De préférence, tbain est supérieure ou égale à 2h et de préférence à 3h. Ainsi tbain peut correspondre à la durée d'un cycle de lavage en machine à laver le linge ou la vaisselle. De préférence, la température TCbain est supérieure ou égale à 30°C, de préférence à 60°C et de préférence à 90°C. Ainsi, TCbain peut correspondre à la température d'un cycle de lavage en machine à laver le linge ou la vaisselle. La solution de lavage peut être de l'eau, éventuellement additionnée d'un produit de lavage tel que du savon.

Par opposition, un emballage en carton n'est pas résistant à l'eau. Il s'altère ou se désagrège lorsqu'il subit un tel bain. Selon un exemple non limitatif, le matériau est étanche à l'eau. Cela signifie que l'eau ne traverse pas la pièce lorsqu'elle est appliquée sous forme de gouttes ou de nappe à sa surface.

Par exemple, le matériau peut être un tissu, de préférence un tissu souple et plus préférentiellement résistant à l'eau. Un tissu est un matériau, appelé textile, obtenu par un assemblage régulier de fils ou fibres, disposés en deux séries croisées à angle droit.

L'assemblage est appelé tissage, les fils sont dits monobrin et les fibres comportent plusieurs brins. Les fils peuvent être naturels comme en coton, chanvre, lin, soie ou laine, ou synthétique comme le nylon, le polyamide ou la viscose. La viscose est une matière plastique d'origine végétale, c'est-à-dire non issue du pétrole. Par exemple, le matériau est un feutre de préférence un feutre souple et plus préférentiellement résistant à l'eau. Un feutre est un matériau, appelé étoffe, obtenu par feutrage de poils ou de laine. Le feutrage consiste en une agrégation intime de fibres textiles d'origine animale, pour en former des étoffes, sans filature ni tissage. Le feutrage peut également consister en une altération d'un tissu de laine qui, sous l'effet de l'usure ou d'un mauvais entretien, prend l'aspect du feutre. En particulier, le feutre est non tissé, fabriqué par pression et ébouillantage de poils. Une pièce 3, 4 à base d'un tissu ou d'un feutre peut être lavée facilement. On notera, par exemple, qu'un emballage 1 ayant des pièces 3, 4 à base d'un matériau souple est différent d'un emballage en carton, en bois ou en vert, car le matériau souple est déformable sous son propre poids. Le matériau souple et résistant à l'eau n'est pas du carton ou un matériau plastique rigide. Avantageusement, une pièce 3, 4 en feutre peut absorber plus facilement des taches de gras. A l'aide d'une structure 2 réalisée à base d'un matériau souple, on peut faciliter son introduction dans une machine à laver. Par ailleurs, une pièce 3, 4 réalisée en tissu souple, ou en feutre souple, peut être facilement pliée, et plus particulièrement peut être enroulée sur elle-même. Ce qui permet, par exemple, de faciliter son insertion dans une machine à laver, mais aussi pour faciliter son rangement en vue d'une utilisation ultérieure.

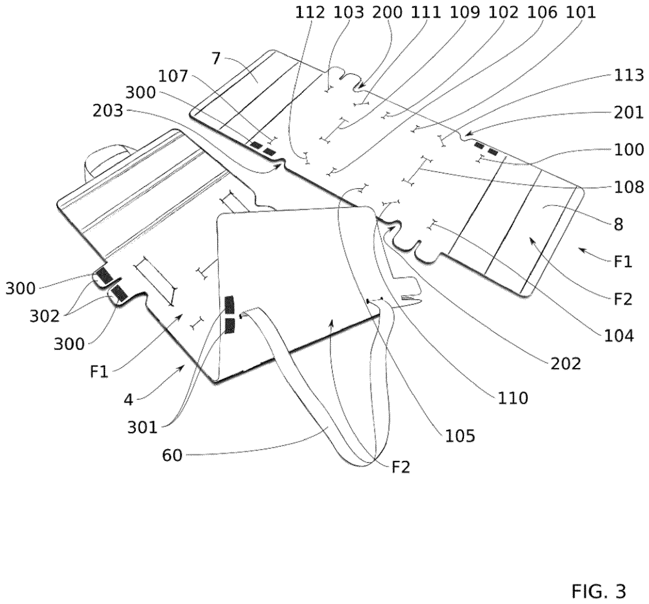

Selon un mode de réalisation préféré, illustré aux figures 1 à 4, la structure 2 comporte une première pièce 3 et une deuxième pièce 4 distincte de la première pièce 3. La première pièce 3 a deux rabats 7, 8 et la deuxième pièce 4 a également deux rabats 9, 10. Dans la position dépliée D, la structure 2 a une forme d'une croix où chaque rabat 7 à 10 correspond à une branche de la croix et les parties centrales 5, 6 des première et deuxième pièces 3, 4 sont superposées pour former un milieu de la croix. Un tel emballage 1 est facile à fabriquer. Par exemple, les première et deuxième pièces 3, 4 peuvent être identiques, en taille et en matériau.

En variante, la structure 2 peut comprendre une seule pièce 3 ayant une partie centrale 5 et quatre rabats 7 à 10 s'étendant depuis la partie centrale 5.

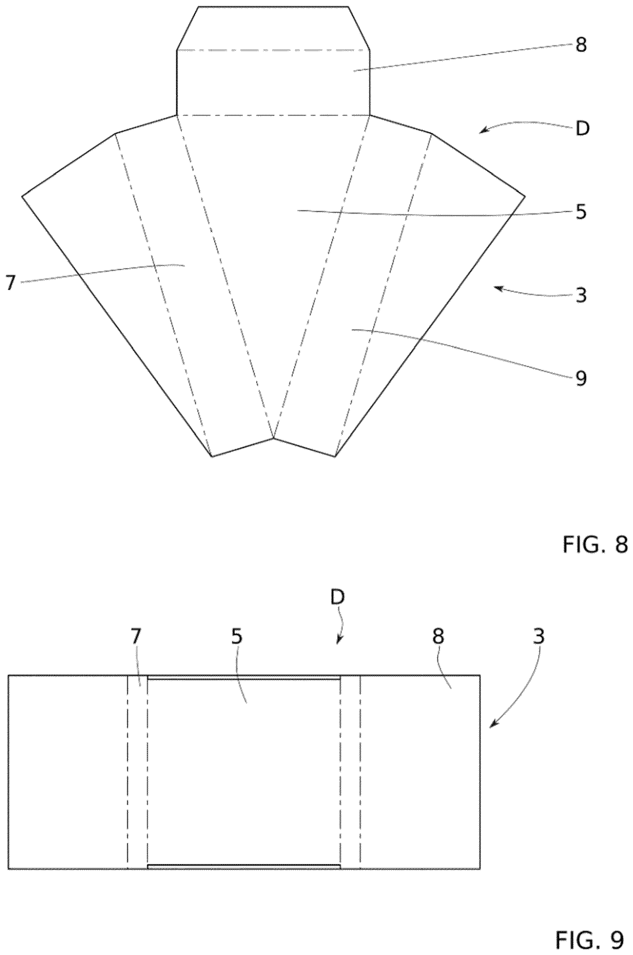

Sur les figures 7 et 8, on a représenté une variante, dans laquelle la structure 2 comprend une pièce 3 ayant une partie centrale 5 et trois rabats 7 à 9. Dans la position repliée R, la structure 2 a une forme d'un prisme triangulaire.

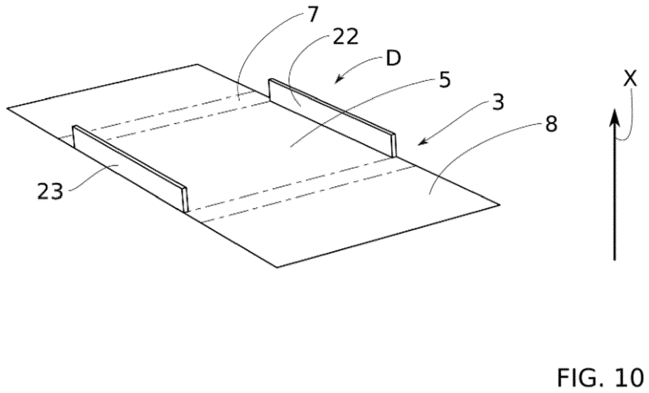

Sur les figures 9 et 10, on a représenté une variante, dans laquelle la structure 2 comprend une pièce 3 ayant une partie centrale 5 et deux rabats 7, 8. En outre, la pièce 3 comprend deux bords 22, 23 s'étendant depuis la partie centrale 5. Plus particulièrement, les bords 22, 23 s'étendent le long d'un axe principal X perpendiculaire à une surface S de la partie centrale 5Les bords 22, 23 peuvent être souples ou rigides, par exemple en tissu rigide ou en feutre rigide.

Avantageusement, un rabat 7 à 10 comprend au moins un renfort 34 à 37 et 44 à 47 définissant, dans le rabat 7 à 10, au moins une zone privilégiée de pliure 30 à 33 et 40 à 43 pour un passage du rabat 7 à 10 de la position dépliée D à la position repliée R. Un renfort 34 à 37 et 44 à 47 permet de rigidifier localement le rabat 7 à 10 pour favoriser le maintien de la structure 2 dans la position repliée R. En outre, un renfort 34 à 37 et 44 à 47 définit au moins une zone privilégiée de pliure 30 à 33 et 40 à 43 permettant de faciliter le pliage de la structure 2. Un renfort 34 à 37 et 44 à 47 peut être un tissu cousu, ou tissé, sur le tissu du rabat 7 à 10. Par exemple, un renfort 34 à 37 et 44 à 47 s'étend principalement selon une direction longitudinale et au moins une zone privilégiée de pliure 30 à 33 et 40 à 43, définie par le renfort 34 à 37 et 44 à 47, s'étend parallèlement à la direction longitudinale. Un rabat 7 à 10 peut comprendre un renfort principal 34 à 37 et un renfort secondaire 44 à 47 afin d'améliorer la pliure du rabat 7 à 10 et renforcer davantage la structure 2 pour la maintenir dans la position repliée R. Par exemple, le renfort principal 34 à 37 s'étend principalement selon une direction longitudinale et le renfort secondaire 40 à 43 s'étend parallèlement à la direction longitudinale du renfort principal 34 à 37. Le renfort principal 34 à 37 et le renfort secondaire 44 à 47 définissent respectivement, dans le rabat 7 à 10, des première et deuxième zones privilégiées de pliure 30 à 33 et 40 à 43 pour un passage du rabat 7 à 10 de la position dépliée D à la position repliée R.

Par exemple, un rabat 7 à 10 d'une pièce 3, 4 comporte une partie externe 50 à 53 comprenant un renfort secondaire 44 à 47, et une partie interne 54 à 57 reliant la partie externe 50 à 53 à la partie centrale 5, 6 de la pièce 3, 4 La partie interne 54 à 57 comprend un renfort secondaire 44 à 47. Par exemple, les parties externe 50 à 53 et interne 54 à 57 sont séparées par la deuxième zone privilégiée de pliure 40 à 43 définie par le renfort secondaire 44 à 47. Dans ce cas, la première zone privilégiée de pliure 40 à 43 est située entre la partie interne 54 à 57 et la partie centrale 5, 6 de la pièce 3, 4. En outre, la deuxième zone privilégiée de pliure 44 à 47 est située entre la partie externe 50 à 53 et la partie interne 54 à 57.

De manière générale, lorsque la structure 2 passe de la position dépliée D à la position repliée R, les rabats 7 à 10 sont pliés, et chaque rabat 7 à 10 comprend au moins une pliure S1, S2 formée dans une zone privilégiée de pliure 30 à 33 et 40 à 43. Avantageusement, dans la position repliée R, chaque rabat 7 à 10 comprend une pliure principale S1 formée dans une première zone privilégiée de pliure 30 à 33 et une pliure secondaire S2 formée dans une deuxième zone privilégiée de pliure 40 à 43. Ainsi, au moins un renfort 34 à 37 et 44 à 47 s'étendant parallèlement à au moins une pliure S1, S2 du rabat 7 à 10.

La première zone privilégiée de pliure 30 à 33 facilite le pliage du rabat 7 à 10 pour former, notamment, la pliure principale S1 et un bord 20 à 23 du contenant 13. En outre, la deuxième zone privilégiée de pliure 40 à 43 facilite le pliage du rabat 7 à 10 pour former, notamment, la pliure secondaire S2 afin de couvrir au moins partiellement le logement 12.

Avantageusement, l'emballage peut comprendre au moins une sangle 60, pour faciliter le transport de l'emballage 1, notamment en fournissant un moyen de préhension pour le porter à une main. Une sangle 60 permet également de renforcer la structure 2 pour la maintenir dans la position repliée R. La structure 2 peut comprendre au moins deux fentes 100 à 113 pour le passage de la sangle 60. De façon générale, la sangle 60 passe dans au moins une première fente 100 à 113 du dessous de la structure 2 au-dessus de la structure 2, puis passe dans une deuxième fente 100 à 113 de manière inverse, c'est-à-dire du dessus de la structure 2 au-dessous de la structure 2. Par exemple, la partie centrale 5 de la première pièce 3 peut comprendre deux fentes 108, 109 pour le passage d'une sangle 60. En variante, la partie centrale 5 de la première pièce 3 peut comprendre quatre fentes 110 à 113, situées respectivement aux quatre coins de la partie centrale 5 pour le passage de deux sangles. Une première portion de la sangle 60 passe dans les fentes 110 et 111 et une deuxième portion de la sangle 60 passe dans les fentes 112, 113. Selon un mode de réalisation préféré, la structure 2 comporte huit fentes 100 à 107 pour le passage d'une sangle 60. La sangle 60 peut comporter un seul brin ou plusieurs brins réunis de manière à former une sangle 60 en boucle fermée. Par exemple, deux fentes 100, 104 sont formées sur la partie interne 55 du deuxième rabat 8, quatre fentes 101, 102, 105 et 106 sont formées sur la partie centrale 5 et deux fentes 103, 107 sont formées sur le premier rabat 7. Dans cette configuration, la sangle 60 améliore le renforcement de la structure 2 dans la position repliée R.

La sangle 60 peut être réglable au sein des fentes 100 à 113. La sangle 60 peut être mobile dans les fentes 100 à 113 afin de régler les longueurs de la sangle 60 de part et d'autre de chacune des fentes 100 à 113. En variante, la sangle 60 peut être montée fixe, par couture, tissage ou collage, sur la structure 2 de sorte que la sangle 60 est maintenue immobile par rapport aux fentes 100 à 113.

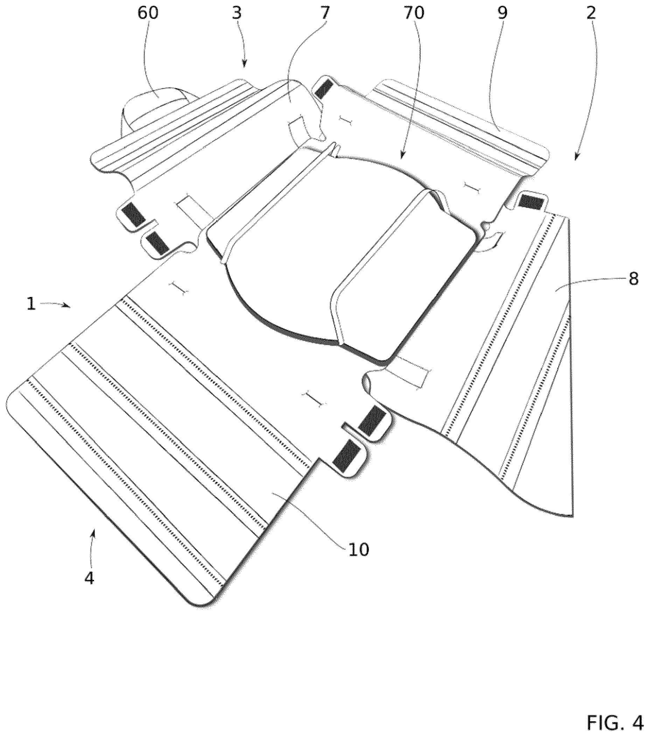

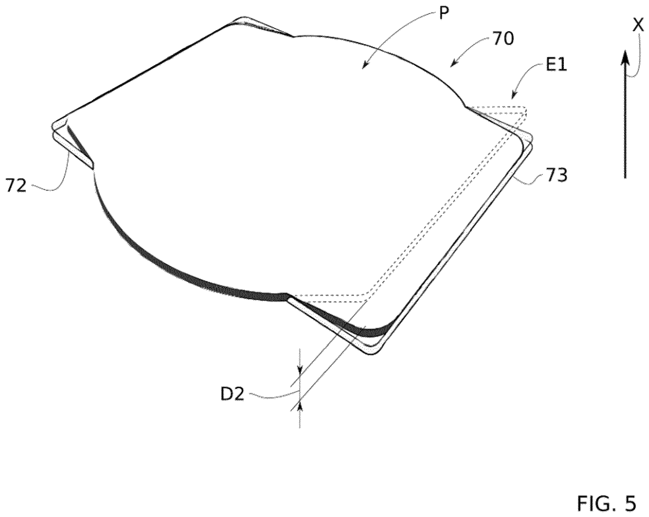

Par exemple, l'emballage 1 comprend au moins un plateau 70, 71 configuré pour être inséré dans le logement 12 et destiné à supporter un aliment. Un plateau 70, 71 est suffisamment rigide pour ne pas se déformer sous l'effet de son propre poids. De préférence un plateau 70, 71 est suffisamment rigide pour ne pas se déformer sous l'effet de son propre poids additionné d'un aliment entièrement contenu sur le plateau 70, 71. Avantageusement, au moins un plateau 70, 71 comprend deux éléments de support 72 à 75 montés mobiles entre :
- une position déployée E2, illustrée aux figures 4 et 6, permettant de maintenir les rabats 7 à 10 à une première distance D1 d'une face supérieure P1a du plateau 70 à 71 en regard des rabats 7 à 10 en position repliée R, et
- une position rétractée E1, illustrée à la figure 5, permettant d'empiler deux plateaux 70, 71 de sorte que leur face P1b, P2a en regard soit distante d'une deuxième distance D2 strictement inférieure à la première distance D1.

Les faces en regard distantes de la deuxième distance D2 correspondent respectivement à la face inférieure P1b d'un plateau supérieur 70 et à la face supérieure P2a d'un plateau inférieur 71. Lorsque l'emballage 1 comprend un unique plateau 70, les éléments de support 72 à 75 permettent, dans la position déployée E2, de maintenir les rabats 7 à 10 à distance de l'aliment posé sur le plateau 70 pour protéger l'aliment, et dans la position rétractée E1 de diminuer l'encombrement du plateau 70 selon l'axe principal X avant utilisation, par exemple lorsqu'on le range dans le logement 12.

Par exemple, la première distance D1 est au moins égale à 3 cm (à 10⁻² mètres près). De préférence, la première distance D1 est supérieure ou égale à 5 cm. Par ailleurs, la deuxième distance D2 peut être inférieure ou égale à 2.5 cm, de préférence inférieure ou égale à 1.5 cm, plus préférentiellement inférieure ou égale à 0.5 cm, et par exemple égale à 0 cm où les faces en regard P1b, P2a sont en contact.

Selon un autre avantage, l'emballage 1 comprend des premier et deuxième plateaux 70, 71 empilés au sein du logement 12, chaque plateau 70, 71 ayant ses deux éléments de support 72 à 75 dans la position déployée E2, le premier plateau 70 étant maintenu à la première distance D1 du deuxième plateau 71 par les éléments de support 74, 75 du deuxième plateau 71.

L'emballage 1 est particulièrement adapté pour porter au moins un aliment, et plus particulièrement au moins deux aliments de grande taille empilés les uns sur les autres, par exemple des pizzas. On entend par aliment de grande taille, un aliment ayant des dimensions proches de celles des parties centrales 5, 6 des pièces de la structure 2. Dans la position rétractée E1, les deux éléments de support 72 à 75 d'un plateau 70, 71 sont éloignés l'un de l'autre pour libérer l'accès au plateau 70, 71 et permettre de placer un aliment sur un plateau 70, 71. Dans la position déployée E2, les deux éléments de support 74, 75 d'un plateau 70, 71 peuvent être rapprochés, l'un vers l'autre, en les inclinant par rapport à la face supérieure P1a, P2a du plateau 70, 71 et selon l'axe principal X. Par exemple, le passage de la position déployée E2 à la position rétractée E1 s'effectue par rotation. Par exemple une rotation par rapport à un axe perpendiculaire à l'axe principal X. Lorsqu'on empile des premier et deuxième plateaux 70, 71 au sein du logement 12, on place les éléments de support 72 à 75 de chaque plateau 70, 71 dans la position déployée E2. Puis on place le premier plateau 70 sur les éléments de support 74, 75 du deuxième plateau 71, comme illustré à la figure 6. Ainsi, la face inférieure P1b du premier plateau 70 est à la première distance D1 de la face supérieure P2a du deuxième plateau 71. On peut ainsi placer facilement deux plateaux 70, 71 superposés au sein du logement 12 du contenant 11.

Avantageusement, une partie centrale 5, 6 a une forme parallélépipédique, de préférence rectangle ou carrée, et peut comprendre des renfoncements 200 à 203, c'est-à-dire des évidements ou échancrures, situés respectivement aux quatre coins de la partie centrale 5, 6. Les renfoncements 200 à 203 sont configurés pour former des orifices, dans la position repliée R, afin de permettre une circulation d'air entre l'extérieur et le logement 12. L'aération permet d'éviter que les aliments ne ramollissent en raison de la condensation.

Selon encore un autre avantage, la structure 2 peut comprendre des éléments de fixation amovible, pour assurer un maintien de la structure 2 en position repliée, et pour faciliter son dépliage, c'est-à-dire pour passer de la position repliée R à la position dépliée D. Les éléments de fixation sont configurés pour coopérer entre eux pour être fixés de manière amovible. Par exemple, les éléments de fixation peuvent être des aimants, des sangles équipés moyens de fermeture amovible. Par exemple, la structure 2 peut comprendre des éléments de fermeture auto-agrippants. De préférence, les éléments auto-aggripants comportent un premier élément de fermeture 300 munis de crochets et un deuxième élément de réception 301 muni de boucles textiles. Par exemple, le deuxième élément de réception peut être le matériau souple des pièces.

La structure 2 comprend un même nombre d'éléments de fermeture 300 que d'éléments de réception 301 qui coopèrent entre eux deux à deux. Par exemple, on place au moins un élément de fermeture 300 sur un rabat 7 à 10 d'une première pièce 3, par exemple sur une languette 302 prévue sur un bord du rabat 7 à 10. Par exemple, on place les éléments de fermeture 300 sur une face avant F1 des pièces 3, 4. On place, en outre, un élément de réception 301, par élément de fermeture 300, de préférence sur une face arrière F2 des pièces 3, 4. De préférence, on place les éléments de fermeture 300 sur chaque face avant F1 des pièces 3, 4, et on place les éléments de réception 301 sur chaque face arrière F2 des pièces 3, 4. Une languette 302 s'étend en saillie du rabat 7 à 10. Un rabat 7 à 10 peut comprendre plusieurs languettes 302. De préférence, un rabat 7 à 10 comprend une languette 302 par plateau 70 à 71 destinés à être inséré dans le logement 12 du contenant 11. Ainsi, lorsqu'on souhaite fournir un emballage 1 pour le transport d'un seul plateau 70, on forme une languette 302, et de préférence une languette 302 par rabat 7 à 10. Au contraire, lorsqu'on souhaite fournir un emballage 1 pour plusieurs plateaux 70, 71, on forme sur un rabat 7 à 10, et préférentiellement sur chaque rabat 7 à 10 autant de languettes 302 que de plateaux 70, 71 à transporter. Ainsi, après avoir plié les rabats pour passer dans la position repliée R, on plie les languettes 302 des rabats 7, 8 d'une première pièce 3 pour que les éléments de fermeture 300 s'accrochent aux éléments de réception 301 prévus sur les rabats 9, 10 de la deuxième pièce 4.

Un tel emballage réalisé dans un matériau souple et lavable est facile à plier et peut être utilisé plusieurs fois. L'emballage a un faible encombrement et peut être facilement rangé. L'emballage est particulièrement adapté pour être introduit dans une machine à laver, et encore plus particulièrement dans une machine à laver le linge.

## Revendications

1. Emballage pour le transport d'aliments, comprenant une structure (2) ayant au moins une pièce (3, 4), chaque pièce (3, 4) comprenant une partie centrale (5, 6) et au moins deux rabats (7 à 10) s'étendant depuis la partie centrale (5, 6) de la pièce (3, 4), la structure (2) étant pliable entre une position dépliée (D) dans laquelle la partie centrale (5, 6) et lesdits au moins deux rabats (7 à 10) de ladite au moins une pièce (3, 4) s'étendent dans un même plan, et une position repliée (R) dans laquelle la structure (2) forme un contenant (11) délimitant un logement (12) pour recevoir au moins un aliment, la partie centrale (5, 6) de ladite au moins une pièce (3, 4) formant un fond (13) du contenant (11) et chaque rabat (7 à 10) étant plié de manière à former un bord (20 à 23) du contenant (11) et à recouvrir au moins partiellement le logement (12), chaque pièce (3, 4) étant à base d'un matériau résistant à l'eau, **caractérisé en ce que** le matériau est en outre souple de façon que chaque pièce (3, 4) soit déformable sous l'effet de son propre poids, et **en ce qu'**au moins un rabat (7 à 10) comprend au moins un renfort (34 à 37 et 44 à 47) définissant, dans ledit au moins un rabat (7 à 10), au moins une zone privilégiée de pliure (30 à 33 et 40 à 43) pour un passage dudit au moins un rabat (7 à 10) de la position dépliée (D) à la position repliée (R).

2. Emballage selon la revendication précédente, dans lequel ladite au moins une pièce (3, 4) comprend quatre rabats (7 à 10) s'étendant depuis la partie centrale (5, 6) de ladite au moins une pièce (3, 4), et, dans la position dépliée (D), la structure (2) a une forme d'une croix où chaque rabat (7 à 10) correspond à une branche de la croix et la partie centrale (5, 6) de ladite au moins une pièce (3, 4) correspond à un milieu de la croix.

3. Emballage selon l'une quelconque des revendications 1 ou 2, dans lequel la structure (2) comporte une première pièce (3) ayant deux rabats (7, 8) et une deuxième pièce (4) distincte de la première pièce (3), la deuxième pièce (4) ayant deux rabats (9, 10), et, dans la position dépliée (D), la structure (2) a une forme d'une croix où chaque rabat (7 à 10) correspond à une branche de la croix et les parties centrales (5, 6) des première et deuxième pièces (3, 4) sont superposées pour former un milieu de la croix.

4. Emballage selon l'une quelconque des revendications précédentes, dans lequel ledit au moins un rabat (7 à 10) comprend un renfort principal (34 à 37) s'étendant principalement selon une direction longitudinale et un renfort secondaire (44 à 47) s'étendant parallèlement à la direction longitudinale du renfort principal (34 à 37), le renfort principal (34 à 37) et le renfort secondaire (44 à 47) définissant respectivement, dans ledit au moins un rabat (7 à 10), des première et deuxième zones privilégiées de pliure (30 à 33 et 40 à 43) pour un passage dudit au moins un rabat (7 à 10) de la position dépliée (D) à la position repliée (R).

5. Emballage selon l'une quelconque des revendications1 à 4, dans lequel au moins un rabat (7 à 10) comprend, dans la position repliée (R), au moins une pliure (S1, S2) formée dans ladite au moins une zone privilégiée de pliure (30 à 33 et 40 à 43), ledit au moins un renfort (34 à 37 et 44 à 47) s'étendant parallèlement à ladite au moins une pliure (S1, S2) dudit au moins un rabat (7 à 10).

6. Emballage selon l'une quelconque des revendications précédentes, comprenant une sangle (60) pour porter l'emballage, et dans lequel la structure (2) comprend au moins deux fentes (100 à 113) pour le passage de la sangle (60).

7. Emballage selon la revendication précédente, dans lequel la sangle (60) forme une poignée ou une hanse portée par au moins un rabat (7 à 10).

8. Emballage selon l'une quelconque des revendications précédentes, dans lequel chaque partie centrale (5, 6) comprend des renfoncements (200 à 203) situés respectivement aux coins de la partie centrale (5, 6), les renfoncements (200 à 203) étant configurés pour former des orifices, dans la position repliée (R), afin de permettre une circulation d'air entre l'extérieur et le logement (12).

9. Emballage selon l'une quelconque des revendications précédentes, dans lequel le matériau est un tissu.

10. Emballage selon l'une quelconque des revendications précédentes, dans lequel le matériau est un feutre.

11. Emballage selon l'une quelconque des revendications précédentes, comprenant au moins un plateau (70, 71) configuré pour être inséré dans le logement (12) et destiné à supporter un aliment, le plateau étant suffisamment rigide pour ne pas se déformer sous l'effet de son propre poids.

12. Emballage selon la revendication précédente, dans lequel ledit au moins un plateau (70, 71) comprend deux éléments de support (72 à 75) montés mobiles entre :
- une position déployée (E2) permettant de maintenir les rabats 7 à 10) à une première distance (D1) d'une face supérieure dudit au moins un plateau en regard des rabats (7 à 10) en position repliée (R), et
- une position rétractée (E1) permettant d'empiler deux plateaux (70, 71) de sorte que leur face en regard soit distante d'une deuxième distance (D2) strictement inférieure à la première distance (D1).

13. Emballage selon la revendication précédente, dans lequel le passage de la position déployée à la position rétractée s'effectue par rotation.

14. Emballage selon l'une quelconque des deux revendications précédentes, comprenant des premier et deuxième plateaux (70, 71) empilés au sein du logement (12), chaque plateau (70, 71) ayant ses deux éléments de support (72 à 75) dans la position déployée (E2), le premier plateau (70) étant maintenu à la première distance D1 du deuxième plateau (71) par les éléments de support (74, 75) du deuxième plateau (71).
